# EUROPEAN PATENT SPECIFICATION

(11) **EP 1 621 738 B1**
(45) Date of publication and mention of the grant of the patent: **23.01.2008**
(21) Application number: 05076553.6
(22) Date of filing: 07.07.2005
(51) Int. Cl.: F01N 3/28

(54) **Gas treatment device and method of making and using the same**
Gasbehandlungseinrichtung und Verfahren zu deren Herstellung und deren Verwendung
Dispositif de traitement de gaz et son procédé de fabrication et d'usage

(30) Priority: 30.07.2004 US 909077
(43) Date of publication of application: 01.02.2006
(73) Proprietor: Delphi Technologies, Inc., Troy, MI 48007 (US)
(72) Inventor: Hardesty, Jeffrey B., Big Rapids, MI 49307 (US); Brush, Dagan W., Troy, MI 48083 (US); Rutland, Gordon J., Flint, MI 48506 (US); Lesher, Eric J., Holly, MI 48442 (US); Thomas, Stephen M., Laingsburg, MI 48848 (US); Wyland, Robert N., Davison, MI 48423 (US); Bowers, Amy S., Mt. Morris, MI 48458 (US)
(74) Representative: Denton, Michael John

(56) References cited:
- EP-A- 0 687 807
- DE-A1- 3 406 721
- US-A- 4 004 888
- US-A- 4 927 608
- PATENT ABSTRACTS OF JAPAN vol. 018, no. 651 (C-1285), 9 December 1994 (1994-12-09) & JP 06 254410 A (SHOWA AIRCRAFT IND CO LTD), 13 September 1994 (1994-09-13)

## Description

### BACKGROUND OF THE INVENTION

Gas treatment devices, such as catalytic converters, evaporative emission devices, hydrocarbon scrubbing devices, and the like, are universally employed to catalytically treat environmentally unfriendly components of automobile exhaust gas streams, such as hydrocarbons (HC), carbon monoxide (CO) and nitrogen oxides (NOₓ). These gas treatment devices generally employ catalysts supported by substrates to catalytically treat the exhaust gas streams. The substrates tend to be frangible and generally have coefficients of thermal expansion differing markedly from their treatment device containers (housing/shell).

Located between the substrate and the housing can be a support material that insulates the housing from both the high exhaust gas temperatures (e.g., temperatures up to about 1,000°C) and the exothermic catalytic reaction occurring within the substrate. The support material, which enhances the structural integrity of the substrate by applying compressive radial forces about it, reducing its axial movement and retaining it in place, is generally concentrically disposed around the substrate to form a support material/substrate subassembly.

Various intumescent and non-intumescent sheets have been found adequate as support materials for this purpose. However, with smaller catalytic converters being moved forward for quicker light-off times, for example, support materials are being subjected to much higher exhaust temperatures. Under these conditions, over a period of time, support materials can be eroded. Furthermore, it is noted that the support material, e.g., ceramic fibers, are increasingly becoming the most expensive component of the gas treatment device other than the substrate.

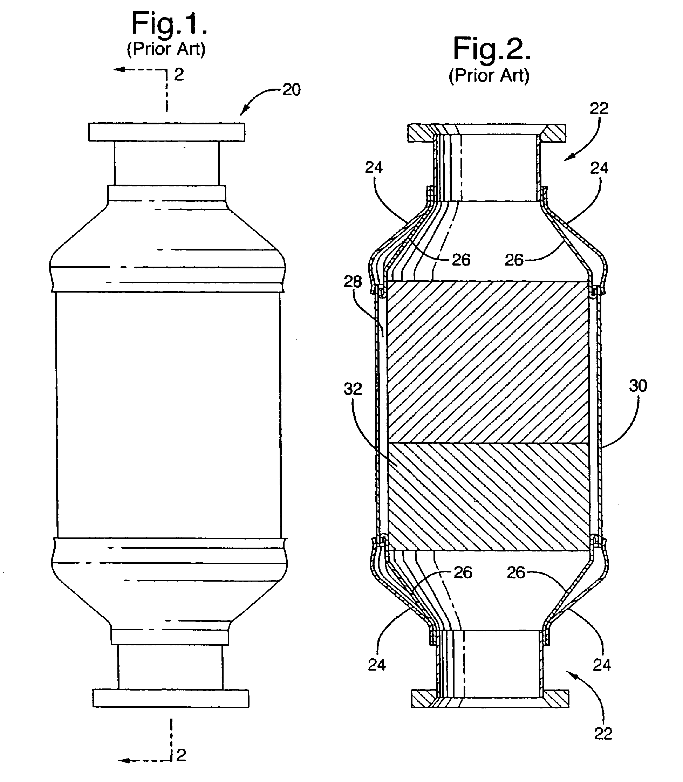

Referring to Figures 1-2, a catalytic converter generally designated 20 is illustrated. The catalytic converter 20 comprises a pair of dual-walled end cone assemblies 22 welded onto a housing 30 as a means for attaching the catalytic converter to the exhaust system of an automobile. A substrate 32 is disposed within housing 30. Generally, the dual-walled end cone assemblies 22 comprise both an outer end cone 24 and an inner end cone 26. The inner end cone 26 can reduce the likelihood of support material erosion and thermal deterioration of a support material 28 during operation of the catalytic converter 20. However, welding the inner end cone 26 into outer end cone 24 can be costly.

Some catalytic converter designs, and especially designs without dual-walled end cone assemblies, can incorporate an edge protection material around the intake area of the substrate to reduce thermal deterioration of the support material. For instance, a stainless steel wire mesh fabric or screen, as described in United States Patent No. 5,008,086 to Merry, is disposed concentrically about the exhaust gas inlet of a substrate. Wire rope edge sealants, like the type disclosed in Merry, can be somewhat effective. However, when employing a wire rope edge sealant, there is still a noticeable amount of support material erosion, and an increased temperature gradient that forms circumferentially across the first inch of the housing due to the conduction of heat through the wire rope. In addition, incorporating edge protection materials may demand additional labor, which also increases manufacturing costs. Furthermore, edge protection materials increase the overall weight of the catalytic converter as well as its cost.

What is needed in the art is a retention system and/or retention device for retaining a substrate within a housing such that less support material is employed in the gas treatment device compared to traditional designs and/or is capable of offering protection to the support material employed in the gas treatment device.

DE-A-3 406 721 discloses a device in accordance with the preamble of claim 1.

### SUMMARY OF THE INVENTION

Disclosed herein is a gas treatment device, and methods of making and using the gas treatment device.

One embodiment of a gas treatment device comprises a housing; a substrate disposed within the housing; a retention device disposed between the housing and the substrate, wherein the retention device comprises a plurality of individual spring elements, and a break, wherein the plurality of individual spring elements exert a compressive force against the housing and the substrate such that the substrate is retained within the housing; and a support material disposed between the housing and the substrate.

Another embodiment of a gas treatment device comprises a substrate; a housing disposed around the substrate; a support material disposed between the substrate and the housing; a retention device comprising a first wall and a second wall connected by a bridge, wherein the retention device is concentrically disposed around the substrate and in operable communication with the housing to form an interference fit, wherein the interference fit comprises an outer surface of the housing in physical communication with an inner surface of the second wall and the bridge; and wherein the retention device is in physical communication with the support material.

A third embodiment of a gas treatment device comprises a substrate; a housing disposed around the substrate; a support material disposed between the substrate and the housing; a retention device comprising at least two segments, wherein each segment comprises a first wall and a second wall connected by a bridge, the retention device concentrically disposed around the substrate and in operable communication with the housing to form an interference fit, wherein the interference fit comprises an outer surface of the housing in physical communication with an inner surface of the second wall and a bridge; and wherein the retention device is in physical communication with the support material.

A fourth embodiment of a gas treatment device comprises a substrate; a housing concentrically disposed around the substrate; a support material disposed between the substrate and the housing; a retention device comprising a first wall and a second wall connected therein by a bridge having a plurality of apertures, the retention device concentrically disposed around the substrate, wherein an outer surface of the housing is in physical communication with an inner surface of the second wall, an end of the housing is in physical communication with the bridge, and the first wall is in physical communication with the support material; and an exhaust system component disposed in operable communication with the housing and the retention device.

One embodiment of a method of manufacturing a gas treatment device comprises disposing a substrate within a housing; disposing a retention devise between the substrate and the housing, wherein the retention device comprises a plurality of individual spring elements, and a break, wherein the plurality of individual spring elements exert a compressive force against the housing and the substrate such that the substrate is retained within the housing; and disposing a support material between the housing and the substrate.

Another embodiment of a method of using a gas treatment device comprises passing a gas through the gas treatment device, wherein the gas treatment device comprises a housing; a substrate disposed within the housing; a retention device disposed between the housing and the substrate, wherein the retention device comprises a plurality of individual spring elements, and a break, wherein the plurality of individual spring elements exert a compressive force against the housing and the substrate such that the substrate is retained within the housing; and a support material disposed between the housing and the substrate.

The above-described and other features will be appreciated and understood by those skilled in the art from the following detailed description, drawings, and appended claims.

### BRIEF DESCRIPTION OF THE DRAWINGS

Refer now to the figures, which are exemplary embodiments, and wherein the like elements are numbered alike.
Figure 1 is a side view of a prior art catalytic converter.
Figure 2 is a cross-sectional view taken from line 2-2 of the prior art catalytic converter of Figure 1.
Figure 3 is a top view of an exemplary embodiment of a retention device (e.g., retainer ring).
Figure 4 is a cross-sectional view of the retention device of Figure 3.
Figure 5 is a perspective view of an exemplary embodiment of a retention device segment.
Figure 6 is a cross-sectional top view taken of a catalytic converter employing two retention device segments as illustrated in Figure 5.
Figure 7 is a perspective view of an exemplary embodiment of an exhaust manifold-catalytic converter assembly.
Figure 8 is a side view of the exhaust manifold-catalytic converter assembly of Figure 7.
Figure 9 is a partial side view of the catalytic converter shown in Figures 7 and 8.
Figure 10 is an enlarged partial cross-sectional view of area 10 of Figure 8.
Figure 11 is a side view of a catalytic converter employing end cone assemblies and two retention devices.
Figure 12 is an enlarged partial cross-sectional view of area 12 of Figure 11.
Figure 13 is a perspective view of an exemplary embodiment of a retention device.
Figure 14 is a cross-sectional view taken from line 14-14 of the retention device of Figure 13.
Figure 15 is a cross-sectional side view of an exemplary embodiment of a gas treatment device.
Figure 16 is a cross-sectional top view taken along line 16-16 of Figure 15.
Figure 17 is an expanded partial cross-sectional view of the embodiment illustrated in Figure 15.
Figure 18 is a top view of another exemplary embodiment of a retention device.
Figure 19 is a top view of yet another exemplary embodiment of a retention device.

### DETAILED DESCRIPTION

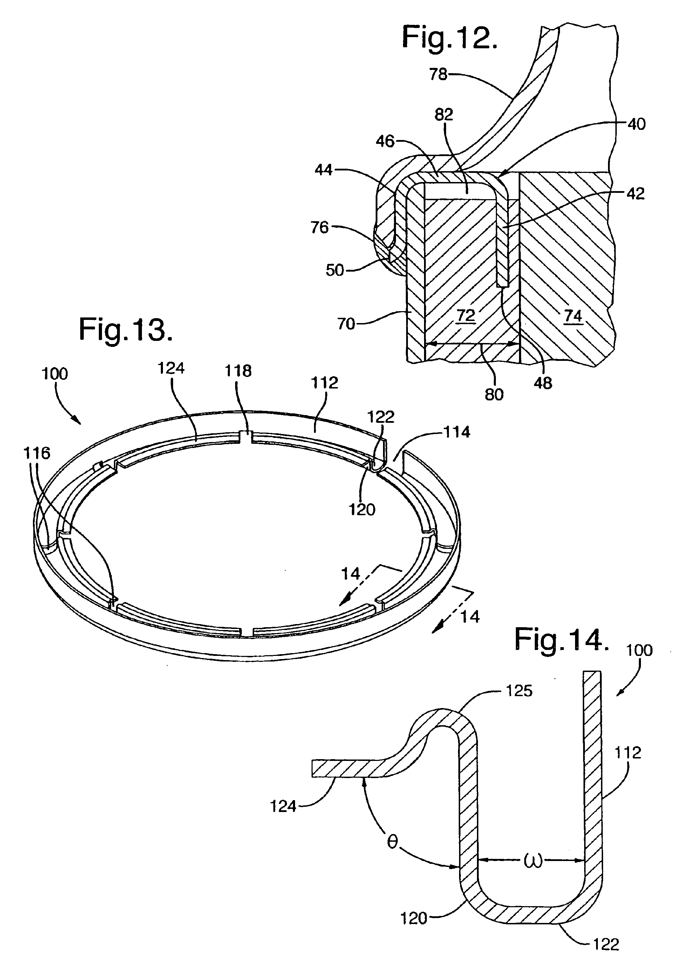

Disclosed herein are retention systems and devices for gas treatment devices, and those gas treatment devices employing the retention system and/or retention devices. It is noted that a gas treatment device may include the following examples, catalytic converters, evaporative emissions devices, scrubbing devices (e.g., hydrocarbon, sulfur, and the like), particulate filters/traps, adsorbers/absorbers, non-thermal plasma reactors, and the like, as well as combinations comprising at least one of the foregoing devices. Additionally, it is noted that the term "break" is used throughout this disclosure in relation to the retention device. The term "break" is used herein to refer to a retention device that is not continuous, i.e., a retention device comprising a space (void, gap, and the like) in the device such that a spatial relationship is defined by a first portion of the retention device relative to a second portion (For example, see reference numeral 114 in Figure 13).

It should further be noted that the terms "first," "second," and the like herein do not denote any order, quantity, or importance, but rather are used to distinguish one element from another, and the terms "a" and "an" herein do not denote a limitation of quantity, but rather denote the presence of at least one of the referenced item. Furthermore, all ranges disclosed herein are inclusive and combinable (e.g., ranges of "up to about 25 weight percent (wt.%), with about 5 wt.% to about 20 wt.% desired, and about 10 wt.% to about 15 wt.% more desired," is inclusive of the endpoints and all intermediate values of the ranges, e.g., "about 5 wt.% to about 25 wt.%, about 5 wt.% to about 15 wt.%," etc.).

While the retention device may comprise any geometry, the geometry of the retention device preferably corresponds with an overall geometry (e.g., a top view geometry) of the gas treatment device, e.g., the geometry of the housing, more specifically a cross section of the housing taken along a major axis. In various exemplary embodiments disclosed herein, reference is made to retention devices comprising a substantially circular overall geometry (e.g., a ring). It is to be understood that such references are made merely for convenience, and one of skill in the art can readily modify these examples to adapt the retention device for use with other geometries, e.g., oval, multisided, and the like.

In an embodiment, a retention device may be disposed at a first end and/or a second end of the gas treatment device such that the retention device is capable of shielding the housing of the gas treatment device from high temperature exhaust gas that can overheat the support material causing expansion thereof and potential housing deformation; is capable of reducing the temperature of the outer surface of the gas treatment device to prevent thermal deformation of the housing; is capable of protecting the support material from thermal deterioration caused by impinging exhaust gas; and is capable of retaining the support material, e.g., preventing/mitigating the support material from plugging the substrate.

The retention device, which may be formed by one or more segments that form an at least partially "U"-shaped cross-sectional geometry, with an overall geometry that corresponds to the shape of the housing of the gas treatment device, may be disposed, in various embodiments, such that an end of the housing of the gas treatment device and a portion of the support material are disposed between the walls of the retention device. The U-shaped cross-sectional geometry of the retention device forms an interference fit with the housing of the gas treatment device. By allowing the retention device to overlap the housing in an interference fit an exhaust manifold can be secured to both the housing and retention device, and welded or otherwise secured in place to form a gas tight seal.

As briefly noted above, a gas treatment device comprises a substrate disposed within a housing. The substrate may comprise any material designed for use in a spark ignition or diesel engine environment and has the following characteristics: (1) capable of operating at temperatures up to about 600°C, and up to about 1,000°C for some applications, depending upon the location of a device within the exhaust system (manifold mounted, close coupled, or underfloor) and the type of system (e.g., gasoline or diesel); (2) capable of withstanding exposure to hydrocarbons, nitrogen oxides, carbon monoxide, particulate matter (e.g., soot and the like), carbon dioxide, and/or gaseous compounds of sulfur such as SO₂, COS, and H₂S; and (3) having sufficient surface area and structural integrity to support a catalyst. Some possible materials include cordierite, silicon carbide, metal, metal oxides (e.g., alumina, and the like), glasses, and the like, and mixtures comprising at least one of the foregoing materials. Some ceramic materials include "Honey Ceram", commercially available from NGK-Locke, Inc, Southfield, Michigan, and "Celcor", commercially available from Corning, Inc., Corning, New York. These materials may be in the form of foils, perform, mat, fibrous material, monoliths (e.g., a honeycomb structure, and the like), other porous structures (e.g., porous glasses, sponges), foams, pellets, particles, molecular sieves, and the like (depending upon the particular device), and combinations comprising at least one of the foregoing materials and forms, e.g., metallic foils, open pore alumina sponges, and porous ultra-low expansion glasses. Furthermore, these substrates may be coated with oxides and/or hexaaluminates, such as stainless steel foil coated with a hexaaluminate scale.

Although the substrate can have any size or geometry, the size and geometry are preferably chosen to optimize surface area in the gas treatment device design parameters. Generally, the substrate has a honeycomb geometry, with the combs through-channel being any multi-sided or rounded shape, with substantially triangular, square, pentagonal, hexagonal, heptagonal, or octagonal, or similar geometries preferred due to ease of manufacturing and increased surface area.

Disposed on and/or throughout (hereinafter "on" for convenience in discussion) the substrate may be a catalyst for converting exhaust gasses to acceptable emissions levels. The catalyst may comprise one or more catalyst materials that are washcoated, imbibed, impregnated, physisorbed, chemisorbed, precipitated, or otherwise applied to the substrate. Possible catalyst materials include metals, such as platinum, palladium, rhodium, iridium, osmium, ruthenium, tantalum, zirconium, yttrium, cerium, nickel, copper, and the like, as well as oxides, and alloys, and mixtures comprising at least one of the foregoing catalyst materials, and other catalysts.

In various embodiments, a support material may be disposed between the substrate and a housing of the gas treatment device to insulate the housing from both the high exhaust gas temperatures and the exothermic catalytic reaction occurring within the substrate. The support material, which enhances the structural integrity of the substrate by applying compressive radial forces about it, reducing its axial movement, and retaining it in place, may be concentrically disposed around the substrate to form a support material/substrate subassembly.

The support material may be an intumescent material (e.g., a material that comprises vermiculite component, i.e., a component that expands upon the application of heat), a non-intumescent material, or a combination thereof. These materials may comprise ceramic materials (e.g., ceramic fibers) and other materials such as organic and inorganic binders and the like, or combinations comprising at least one of the foregoing materials. Non-intumescent materials include materials such as those sold under the trademarks "NEXTEL" and "INTERAM 1101HT" by the "3M" Company, Minneapolis, Minnesota, or those sold under the trademark, "FIBERFRAX" and "CC-MAX" by the Unifrax Co., Niagara Falls, New York, and the like. Intumescent materials include materials sold under the trademark "INTERAM" by the "3M" Company, Minneapolis, Minnesota, as well as those intumescents which are also sold under the aforementioned "FIBERFRAX" trademark, as well as combinations thereof and others.

The support material/substrate subassembly may be concentrically disposed within a housing. The choice of material for the housing depends upon the type of exhaust gas, the maximum temperature reached by the substrate, the maximum temperature of the exhaust gas stream, and the like. Suitable materials for the housing can comprise any material that is capable of resisting under-car salt, temperature and corrosion. For example, ferrous materials may be employed, such as ferritic stainless steels. Ferritic stainless steels can include stainless steels such as, e.g., the 400 - Series such as SS-409, SS-439, and SS-441, with grade SS-409 generally preferred.

The housing can be manufactured by one or more techniques, and, likewise, the support material/substrate subassembly may be disposed within the housing using one or more methods. For example, the support material/substrate subassembly can be inserted into a variety of housings, such as both circular and non-circular designs (e.g., oval, elliptical, square, trapezoidal, and the like), using a stuffing cone. The stuffing cone is a device that compresses the support material concentrically about the substrate. The stuffing cone then stuffs the compressed support material/substrate subassembly into the housing, such that an annular gap preferably forms between the substrate and the interior surface of the housing as the support material becomes compressed about the substrate.

In other embodiments, for example, the housing can comprise two half-shell components, also known as, and more commonly referred to as a clamshell design. The two half-shell components are compressed together about the support material/substrate subassembly, such that an annular gap preferably forms between the substrate and the interior surface of each half-shell as the support material becomes compressed about the substrate.

In yet another embodiment, the housing can also have a non-circular geometry such as oval, oblong, rectangular, trapezoidal, and the like. Such non-circular housing designs can preferably be manufactured by employing a half-shell, preferably a die formed clamshell, which, when combined with another half, can form the non-circular desired geometry. The support material/substrate subassembly can be placed within one of the half-shells prior to assembly of the gas treatment device. The other half-shell can be attached to the half-shell containing the support material/substrate subassembly, such that an annular gap preferably forms between the substrate and the interior surface of each half-shell as the support material becomes compressed about the substrate. The half-shells can be welded together, preferably using a roller seam welding operation.

Once the substrate is disposed within the housing, an exhaust system component may be disposed over one or both ends of the housing. Some possible exhaust system component comprise end cone(s), end plate(s), exhaust manifold(s), connecting pipe(s), exhaust pipe(s), coupling apparatus, flexible coupling apparatus, other exhaust system components, combinations comprising at least one of the foregoing components, and the like. The exhaust system components may then be securely attached in operable communication with the housing by riveting, bracketing, sealing, adhering, interlocking, snapping, screwing, adjoining, welding, combinations comprising at least one of the foregoing methods, and the like. Generally, one or more securing devices such as rivets, brackets, sealants, adherents, interlocking mechanisms, snaps, screws, joints, welds, combinations comprising at least one of the foregoing securing devices, and the like, are employed. Preferably, one or more welds are disposed around the outer periphery of the housing in physical communication with the exhaust system component (e.g., end cone), retention device, and housing to provide a gas tight seal.

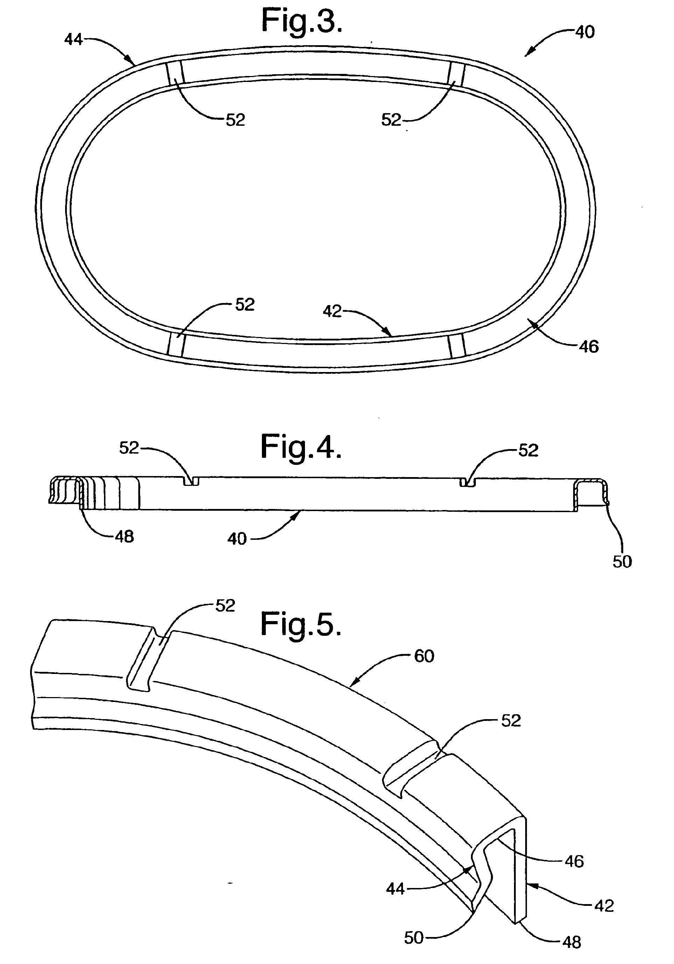

Referring now to Figures 3-6, after the substrate is concentrically disposed within the housing, one or more retention devices 40, or retention device segments 60, can be placed in operable communication with the housing. In an embodiment, the retention device 40 comprises a substantially U-shaped ring having a first wall 42, comprising an edge 48, and a second wall 44, comprising an edge 50, connected therein by a bridge 46. The second wall 44, which may have a length less than the first wall 42 length, preferably has an edge 50 that is disposed at an angle away from second wall 44 to further facilitate engagement of the retention device with the exhaust system component and formation of the fluid tight seal. The edge 48 preferably penetrates the support material when the retention device 40 is concentrically disposed between the housing and the substrate. In other embodiments, the edge 48 may be sharpened to a pointed edge that can penetrate the support material.

The bridge 46, second wall 44, and edge 50 preferably are in physical communication with the outer surface of the housing, and the wall 44 overlaps at least a portion of the outer surface of the housing to form an interference fit between the retention device 40 and housing. As the retention device 40 is placed within the housing, at least a portion of the outer surface of the housing interferes with the inner surface of the retention device 40, i.e., the outer surface of the housing is in physical communication with the inner surface of the second wall 44 and an end of the housing is in physical communication with the bridge 46. This interference fit ensures the retention device 40 remains in position as an exhaust system component, may be placed in operable communication with the housing and retention device. The interference fit formed by the housing and retention device 40 is especially preferred when employing an exhaust manifold. Since the exhaust manifold extends over both the retention device 40 and housing, a weld placed at the juncture of the exhaust manifold, retention device, and housing can seal the entire gas treatment device.

Optionally, the bridge 46 may further comprise one or more apertures 52, with about two to about six apertures 52 preferred. The aperture(s) 52 enables the expansion and contraction of the retention device 40 as the gas treatment device temperature changes, e.g., from less than about 0°C up to about 1,200°C.

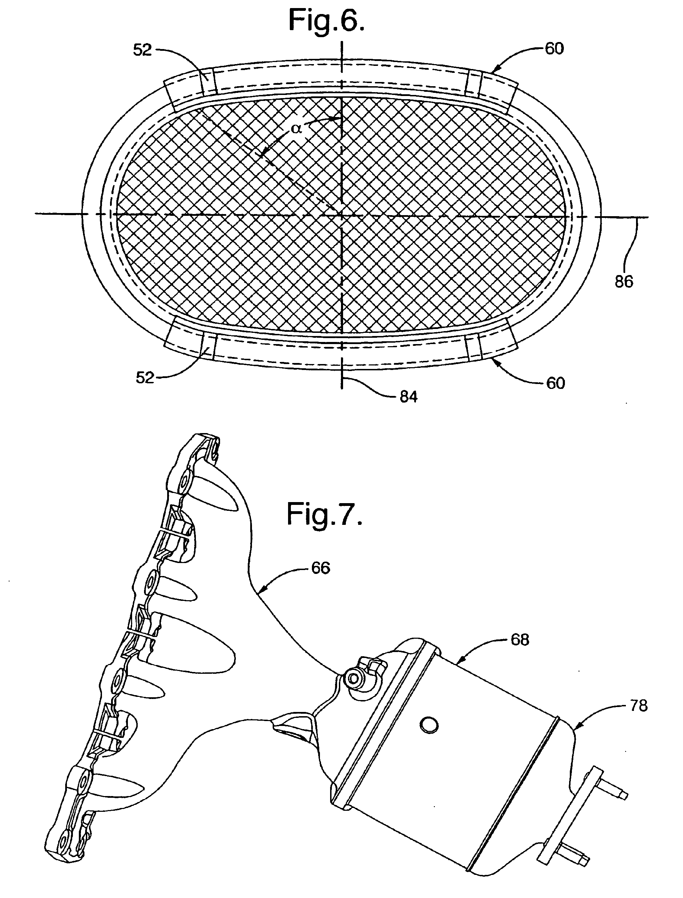

As is shown in Figures 5 and 6, the retention device may be formed of two or more segments 60 that are each disposed around a portion of the end of the housing, and that may be collectively disposed around all or a portion of the end of the housing. Retention device segments 60 can preferably be used in oval shaped catalytic converters, disposed along the major cross-sectional axis 86, due to the potential for growth or expansion of the oval shaped housing across its minor cross-sectional axis 84 during operation and close proximity of the minor axis to the stream of inlet gases.

The dimensions of the retention device 40 are dependent upon the size and geometry of the housing and the exhaust system component. Although the retention device walls can be of an equal length, the length of the first wall is preferably greater than the length of the second wall to enable ready engagement of the support material. Generally, the length of the second wall may be up to about eighty-five percent of the length of the first wall, and preferably up to about seventy-five percent of the length of the first wall, and most preferably up to about sixty percent of the length of the first wall. With respect to thickness, the retention device preferably has a wall and bridge thickness sufficient to attain the desired structural integrity, preferably to enable easy handling and/or installation, and to minimize cost. The thickness of the walls and the bridge can be equal or different, and is generally less than or equal to 5 millimeters ("mm") for most applications, with less than or equal to 3 mm preferred, and less than or equal to 1 mm more preferred.

The width of the bridge (e.g., the distance between the first wall and the second wall) can be proportioned according to an annulus 80 of the gas treatment device (e.g., the distance measured between the outer surface of the substrate to the inner surface of the housing). Preferably, the bridge enables the retention device to span from the outer surface of the substrate to the outer surface of the housing, preferably without physical communication with the substrate. The width of the bridge may be less than or equal to ninety-five percent of the annulus, and preferably less than or equal to ninety percent of the annulus, and most preferably less than or equal to eighty-five percent of the annulus. The apertures disposed in the bridge can have a width of less than or equal to 15 mm, with less than or equal to 10 mm preferred, and less than or equal to 5 mm most preferred.

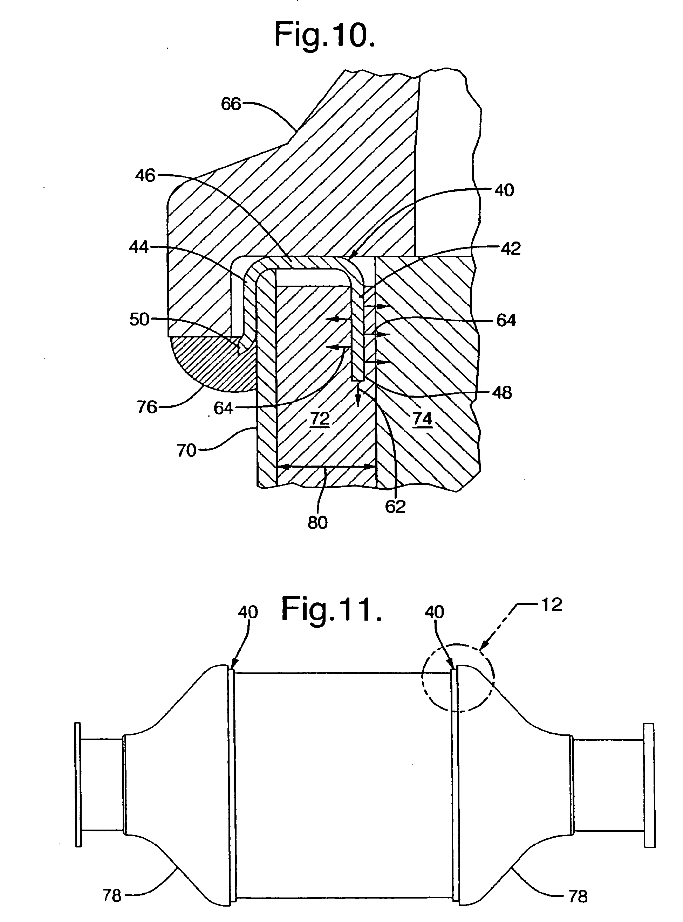

As is illustrated in Figures 10 and 11, the first wall 42 is preferably disposed in the housing 70 such that it penetrates the support material 72. Preferably, the first wall 42 penetrates the support material a sufficient distance to attain the desired level of protection thereof. The first wall 42 can penetrate the support material 72 a distance of less than about eighty percent of the length of the first wall 42, and preferably less than about seventy percent of the length of the first wall 42, and most preferably less than about sixty percent of the length of the first wall 42. When the first wall 42 penetrates the support material 72, the mount density of the support material 72 increases.

For example, the annulus 80 represents an area filled with compressed support material having a mount density of 1 gram per cubic centimeter ("g/cc"). When the first wall 42 of the retention device penetrates the support material, the first wall 42 first exerts a force in the direction of arrow 62. The area of the annulus 80 decreases due to the insertion of the retention device 40. As a result, the first wall 42 of the retention device also exerts a force in the direction of arrows 64 upon the support material 72. This additional force causes the mount density of the support material 72 disposed on either side of the first wall 42 to increase, e.g., up to about 2.00 g/cc, and preferably up to about 1.60 g/cc, and most preferably up to about 1.2 g/cc.

The choice of material for retention device depends upon the type of exhaust fluid, the maximum temperature reached by the substrate, the maximum temperature of the exhaust fluid stream, and the like. The retention device can comprise any material compatible with the operating conditions, e.g., any deformable metal such as iron, nickel, chromium, alloys such as stainless steel, as well as combinations and alloys comprising at least one of the foregoing materials, and the like, with a nickel/chromium alloy or a iron/chromium/aluminum preferred.

A retention device can be manufactured by first rolling or bending flat stock material into a shape substantially similar to the geometry of the intended gas treatment device. In an embodiment, the retention device may be made to be continuous by attaching the ends of the rolled/bent stock material. For example, the ends may be attached using a weld or other attachment, such as riveting, brazing, and/or mechanical interlocking the ends, overlapping each end of the retention device, end over end, and in close proximity with one another, without attaching the ends together. In another embodiment, the retention device can also be manufactured by cutting a tube of stock material to a desired length and diameter to form a shape substantially similar to the geometry of the intended gas treatment device, e.g., circular, oval, square, trapezoidal, and the like. It is noted that this embodiment eliminates attaching the ends together.

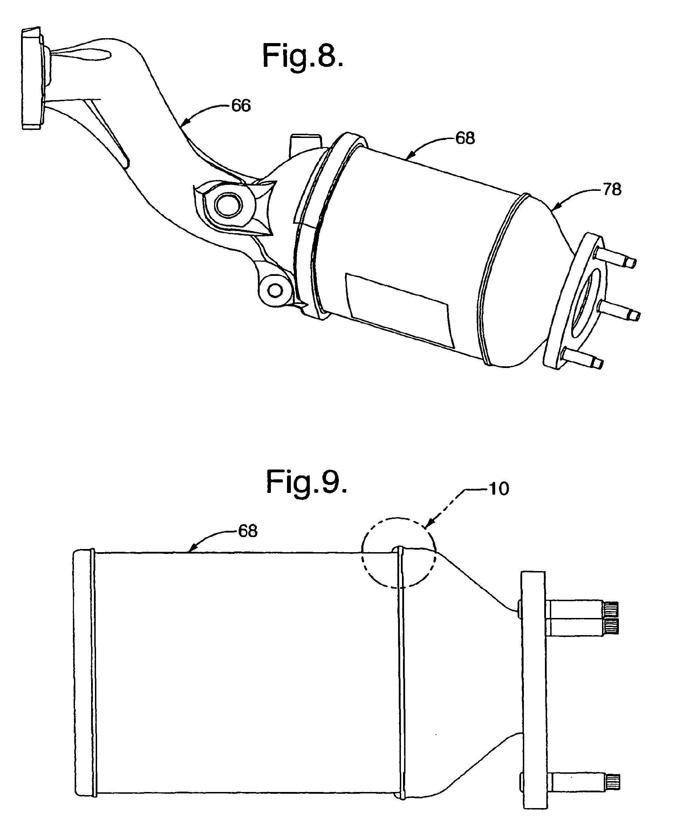

For purposes of illustration, the exemplary retention device and retention device segments can be employed with exhaust manifold-catalytic converter assemblies and end cone-catalytic converter assemblies. Referring now to Figures 7-12, the retention device 40 can be used with catalytic converter designs for attachment to exhaust manifolds 66 and/or end cone assemblies 78.

As illustrated in Figures 10 and 12, retention device 40 can be inserted into a housing 70 to penetrate a support material 72 surrounding a substrate 74 of the catalytic converter 68. In embodiments that employ the exhaust manifold 66 and end cone assembly 78 respectively, the retention device can be placed in operable communication with the housing 70, and preferably the retainer retention device 40 and the housing 70 operably communicate to form an interference fit. More preferably, the outer surface of the housing 70 is in physical communication with the inner surface of the first wall 42 and bridge 46 of the retention device 40 such that second wall 44 of the retention device 40 overlaps a portion of the outer surface of the housing 70, thus operably communicating with each other to form the interference fit. It is further noted that an air gap 82 may be formed by a space between bridge 46 and support material 72.

Optionally, the retention device 40 may be secured within the housing 70, using a weld(s), adhesive, bonding agent, screw(s), snap(s), bracket(s), rivet(s), combinations comprising at least one of the foregoing securing devices, and the like, prior to attachment of the exhaust system component. Once the retention device 40 is disposed over and optionally secured to the housing 70, an exhaust system component, such as exhaust manifold 66 or end cone assembly 78, can be placed in operable communication with both the housing 70 and retention device 40. The exhaust system component 66, 76 can then be secured to the housing 70 by a weld 76, or the like.

The weld 76 can be a single continuous weld circumferentially positioned about the juncture of the exhaust system component 66, 78 and housing 70 to ensure a fluid tight seal, or can comprise one or more spot welds, where the seal between the retention device 40 and housing 70 is relied upon to inhibit fluid movement into or out of the catalytic converter 68. For example, a metal inert gas welding step ("MIG", also referred to as gas metal arc welding, or "GMAW") can be used to weld the exhaust manifold 66 or end cone assembly 78, retention device 44, and housing 70 together. A single welding step is preferred, since the step can be incorporated into the current manufacturing scheme without increasing costs and labor, or impeding manufacturing efficiency. Most preferably, the weld 76 is in physical communication with and secures the exhaust system component 66, 78, housing 70, and retention device flared edge 50.

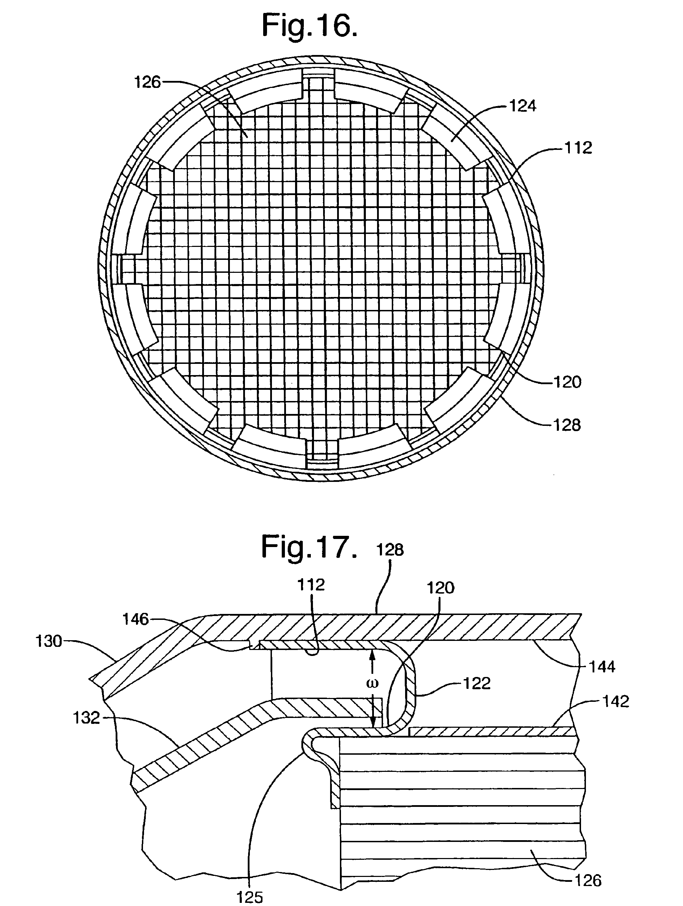

Referring now to Figures 13-17, various other embodiments of an exemplary retention device are illustrated. For example, a retention device 100 comprises an outer wall 112 defining the overall geometry of the retention device 100. It is noted that the outer wall 112 may be continuous or it may comprise a break 114, which may be used to prevent the retention device 100 from buckling as it expands during operating conditions. The retention device 100 further comprises a plurality of individual spring elements 116 having outer wall 112 in common. Each individual spring element 116 is separated from each other by a plurality of apertures 118 such that each spring element 116 is capable of moving independently of each other. It is noted that the number, shape, and size of spring elements 116 may vary with application.

Each spring element 116 has a design capable of providing an interference fit between a housing and a substrate/substrate assembly of a gas treatment device. In other words, each spring element 116 has a cross-sectional geometry that is mechanically compressible. For example, as discussed above in relation to other embodiments, the cross sectional geometry may be semi-circular, semi-cylindrical, semi-oval, U-shaped, semi-non-circular (e.g., truncated: triangular, square, rectangular, trapezoidal, pentagonal, hexagonal, and the like), and other semi-circular and semi-non-circular cross-sectional geometries, with U-shaped preferred.

Preferably, in an embodiment, each spring element 116 forms at least a partially "U"-shaped cross-sectional geometry (Figure 14). More particularly, a spring element 116 is defined by outer wall 112, inner wall 120, a bridge 122 that is in physical communication with the outer wall 112 and the inner wall 120, and a plurality of apertures 118 disposed in the inner wall 120 and the bridge 122. The number of apertures 118 depends on the desired number of individual spring elements 116. Preferably, the number of apertures 118 is sufficient to provide a number of spring elements 116 sufficient to provide the structural integrity to retain the substrate in position relative to the housing of the gas treatment device.

In various embodiments, the spring element 116 may further comprise a flange 124 in physical communication with inner wall 120. The flange 124 is shaped to complement an end face of the substrate employed in the gas treatment device. For example, the flange 124 may extend at an angle theta (θ) from the inner wall 120, wherein the angle θ is about 90° (e.g., about 85° to about 95°) for most substrate designs having a substantially flat end face. In other embodiments, the angle θ may be about 90° to about 120°, e.g., for use with a gas treatment device comprising a bullet shaped substrate. In yet other embodiments, the flange 124 may be in physical communication with inner wall 120 by a clearance portion 125, which may have any size or shape such that an edge of a substrate is not in physical communication with the clearance portion 125. Without being bound by theory, if a clearance portion 125 is not provided, an interface between flange 124, inner wall 120, and the substrate, may cause the substrate to fracture, chip, and the like under the expansion and contraction of each spring element 116. Preferably, the spring element 116 comprises a clearance portion 125.

A width, "w", of the bridge 122 of retention device 100 (e.g., the distance between outer wall 112 and inner wall 120) may be proportioned according to an annulus of the gas treatment device (e.g., the distance measured between the outer surface of the catalyst substrate to the inner surface of the housing). Preferably, the bridge 122 enables physical communication of the outer wall 112 with an inside wall of a housing of a gas treatment device and physical communication of the inner wall 120 with an outside surface of a substrate and/or substrate assembly.

Preferably, the retention device 100 comprises a break (e.g. 114). As briefly noted above, break 114 may be used to prevent the retention device 100 from buckling as it expands during operating conditions. The break 114 has a size sufficient to allow the retention device 100 to expand without applying a pressure to the substrate that may damage the substrate. The break 114 may be wedged shaped, square shaped, and the like.

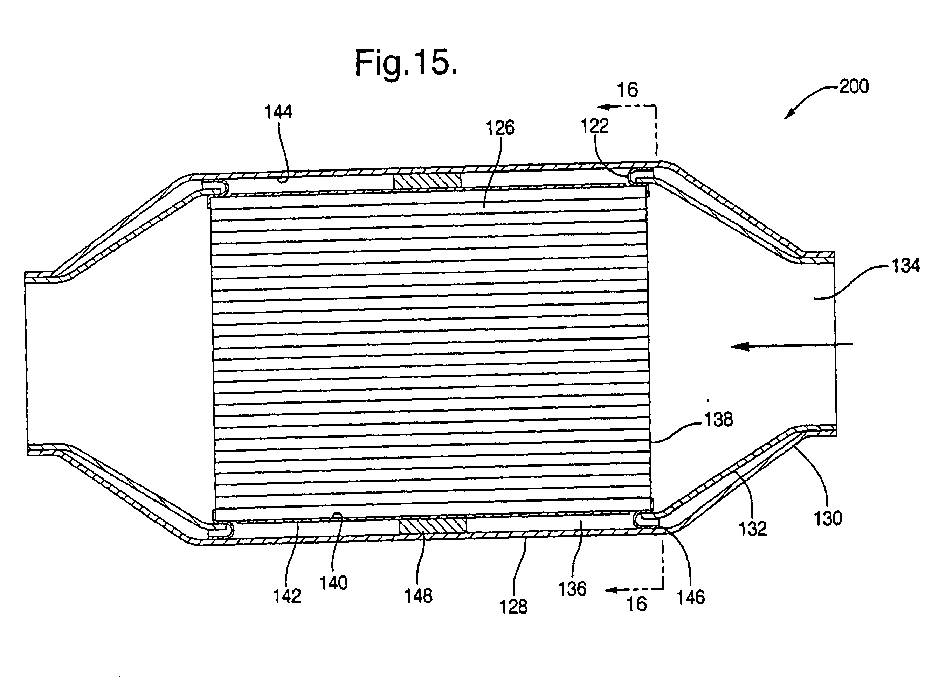

Referring now to Figure 15-17, a gas treatment device generally designated 200 comprises a substrate 126 disposed within a housing 128. An end cone 130 is in physical communication with housing 128. Preferably, the gas treatment device 200 comprises inner end cone 132, which is in physical communication with end cone 130. The end cone 130 has an opening 134 that allows a fluid (e.g., exhaust flow) to enter substrate 126. The substrate 126 preferably has an outside diameter less than an inside diameter of the housing 128. The substrate 126 comprises end face 138 that is in fluid communication with opening 134, and outer surface 140 that may be covered with a sheath 142 in various embodiments. An annulus 136 is formed between the substrate 126 and housing 128.

The retention device 100 is disposed in annulus 136 such that the retention device 100 forms an interference fit (e.g., pressure fit) with the substrate 126 and the housing 128. More particularly, flange 124 is disposed in physical communication with end face 138. The inner wall 120 of each spring element 116 is disposed in physical communication with an outer surface 140 or sheath 142. Outer wall 112 is disposed in physical communication with an inside surface 144 of housing 128. The bridge 122 of spring elements 116 is sized such that the inner wall 120 and outer wall 112 may maintain the above-described relationship.

The spring elements 116 of retention device 100 are capable of moving independently of each other. As such, the spring elements 116 are able to expand and contract depending on operating conditions without adversely affecting the substrate 126, e.g., causing cracking to the substrate 126. Accordingly, the spring elements 116 are preferably not directly physically attached (e.g., welding, and the like) to the substrate 126, housing 128, and/or sheath 142. Rather, dimples 146, steps, ribs, and the like may be employed in conjunction with flange 124 to retain the spring elements 16 in an axial direction. The term axial, as used herein, refers to a direction parallel to the exhaust flow direction in the gas treatment device (e.g., 200), which is illustrated schematically in Figure 15 by an arrow. It is further noted that the retention device 100 is retained in the radial direction by the pressure exerted on the substrate 126 and the housing 128.

It is further noted that a strip of support material 148 may be disposed in the annulus 136 that is formed between the substrate 126 and the housing 128 in an amount sufficient to prevent gas by-pass around the substrate 126. More particularly, the support material 148 can act as a fluid barrier such that exhaust fluid flow in the annulus 136 is impeded. Furthermore, the support material 148 may be used to retain the substrate 126 in position within the housing 128. Preferably, the support material 148 is disposed in the annulus 136 at a distance between a first retention device (e.g., 100) and a second retention device. However, it is noted that the substrate 126 is held in position relative to the housing using at least one retention device. In other words, the support material 148, which has traditionally been employed to retain the substrate 126 within the housing 128, may optionally be employed. The support material 148 may have a length sufficient to prevent gas by-pass around the substrate 126. For example, the support material may have a length of about 5 millimeters (mm) to a length substantially equal to the length of the substrate, with a length of about 10 mm to about 50 mm preferred.

Sheath 142 may be concentrically disposed around the substrate 126 such that the sheath 142 may block radiant heat emanating from the substrate 126. This sheath 142 is preferably employed in embodiments where the substrate 126 is a ceramic. In other words, sheath 142 performs acts to minimize the temperature at housing 128. The sheath 42 may comprises similar materials discussed above in relation to housing 128 and retention device 100. For example, the sheath 100 can comprise any material compatible with the operating conditions, e.g., iron, nickel, chromium, alloys such as stainless steel, as well as combinations and alloys comprising at least one of the foregoing materials.

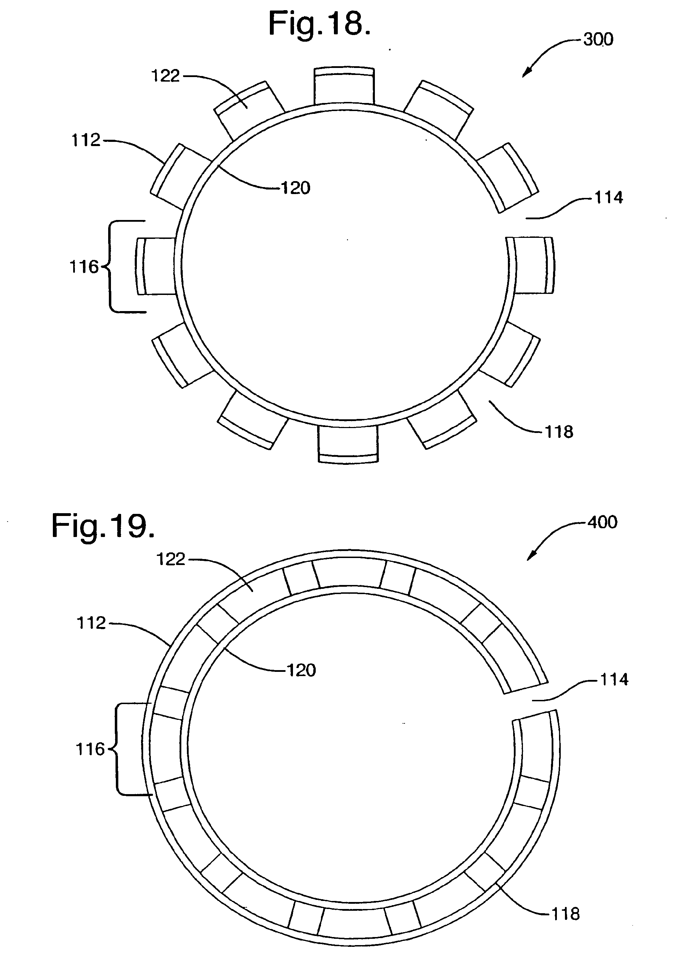

Figures 18-19 are top views of other exemplary retention devices comprising spring element 116. More particularly, as is illustrated in Figure 18, a retention device 300 comprises an inner wall 120 having a geometry corresponding to the overall geometry of the retention device 300. It is noted that the inner wall 120 may be continuous or it may comprise a break 114, which may be used to prevent the retention device from buckling as it expands during operating conditions. The retention device 300 further comprises a plurality of individual spring elements 116 having inner wall 120 in common. Each individual spring element 116 is separated from each other by a plurality of apertures 118 such that each spring element 116 is capable of moving independently of each other. It is noted that the number, shape, and size of spring elements 116 may vary with application.

More particularly, a spring element 116 is defined by outer wall 112, inner wall 120, a bridge 122 that is in physical communication with the outer wall 112 and the inner wall 120, and a plurality of apertures 118 disposed in the outer wall 112 and the bridge 122. The number of apertures 118 depends on the desired number of individual spring elements 116. Preferably, the number of apertures 118 is sufficient to provide a number of spring elements 116 sufficient to provide the structural integrity to retain the substrate in position relative to the housing of the gas treatment device.

Referring now to Figure 19, an embodiment of a retention device generally designated 400 is illustrated. In this embodiment, each spring element 116 is defined by outer wall 112, inner wall 120, a bridge 122 that is in physical communication with the outer wall 112 and the inner wall 120, and a plurality of apertures 118 disposed in the bridge 122. In other words, each spring element has both the outer wall 112 and inner wall 120 in common, with a plurality of apertures 118 in the bridge 122 separating each spring element 116.

It has further been discovered that the arrangement of the apertures (e.g., holes, gaps, slots, and the like can reduce bending moment energy of the retention device, thereby reducing the deflection in the retention device. Since deflection of the retention device into the substrate can cause the substrate to crack, a reduction in the bending moment energy of the retention device can extend the life of the gas treatment device. Preferably, the apertures may be located at an angle alpha (α) from the major axis of the retention device as illustrated in Figure 6. Moreover, it is noted that the placement of the apertures may be especially beneficial for non-circular (e.g., oval, elliptical, square, trapezoidal, and the like) designed retention devices. For example, for an oval shaped retention device, the angle alpha may be about 90 degrees to about 45 degrees, with an angle alpha of about 70 degrees to 60 degrees preferred.

It is noted that various embodiments of the retention device disclosed herein may be effective at reducing support material erosion. The following non-limiting example is included to illustrate the effectiveness of the retention device at reducing support material erosion.

### EXAMPLE

A retention device was secured in a catalytic converter, which was secured to an exhaust manifold. Three exhaust manifold-catalytic converter assemblies were assembled. Each exhaust manifold-catalytic converter assembly employing the retention device was subjected to a thermal cycling process to test the effectiveness of the retention device at preventing support material erosion. The thermal cycling process comprised operating the assembly at about 950°C for a predetermined number of cycles, then decreasing the temperature to about 450°C for a predetermined number of cycles, and repeating these temperature variations for a predetermined number of cycles for a total of about 250 hours. It is noted that this thermal cycling process is equivalent to operating the exhaust manifold-catalytic converter assembly for approximately 100,000 miles. Under these conditions, the leading edge of the support material in each of the three exhaust manifold-catalytic converter assemblies experienced less than 5% erosion or thermal deterioration.

Embodiments of the retention device provide several distinct advantages over non-retention devices and methods, including preventing/reducing exhaust gas impingement upon support material, which can reduce support material erosion. The retention device may prevent exhaust gas streams from directly impinging upon the support material or the remaining exposed housing. As a result, the expansion of the support material may not erode or deteriorate as quickly as catalytic converters that do not employ retention devices.

Furthermore, embodiment of the retention device may insulate the housing from high temperatures achieved by the exothermic reaction taking place in the substrate. The retention device(s) prevent the housing from experiencing conduction, or the transfer of heat from the substrate to the housing via the support material. This reduces the likelihood and prevents the deformation of the housing. In other words, embodiment of the retention device may provide a more efficient and cost effective method for insulating the housing compared to catalytic converters that do not employ retention devices.

Unlike the edge protection materials, the retention device can also be incorporated in manufacturing processes. For example, employing wire rope edge sealants can incorporating several additional steps, including the tedious process of weaving the wire mesh into a strip and adhering the strip to the support material; a time and labor intensive process. In contrast, forming and employing the retention device is simple. Forming retention device or retention device segments can be achieved in a single tooling and sizing operation. Inserting the retention device can be achieved in a single assembly step and, additionally, welded as part of a single welding step or not welded at all in some embodiments (See discussion of Figures 13-19). The retention device promotes efficient use of time and labor as well as being cost effective, in the end, to the consumer.

Additionally, it is noted that exemplary embodiments of the retention device do not add welding steps to the existing catalytic converter assembly process. The retention device (e.g., retainer ring) can be welded in place simultaneously with the housing and exhaust system component. This welding process promotes efficiency with no additional labor and in the long run is cost effective to consumers.

Advantageously, various embodiments of the retention device disclosed herein allows for the use of substantially less support material than has traditionally been used in an exhaust treatment device. Since support material is generally the second most expensive component of an exhaust treatment device (with the cost of the substrate generally being the most expensive), any reduction in the amount of support material can greatly reduce the cost of the exhaust treatment device. The retention devices disclosed herein allow a substrate to be retained within a housing without the use of support material or a substantially reduce amount of support material, thereby eliminating or greatly reducing the amount of support material employed in an exhaust treatment device.

Additionally, it is noted that support material, in addition to retaining a substrate within a housing, acts to insulate the housing. In various embodiments, a sheath concentrically disposed around a substrate may block radiant heat emanating from the substrate, thereby insulating the housing. Further, it is noted that the cost of the sheath is substantially less than the cost of the support material. As such, embodiments comprising a sheath are generally less expensive than traditional exhaust treatment designs comprising a support material.

Yet another advantage is that the retention device is compatible for use with thin wall substrates, i.e., substrates having a wall thickness less than or equal to about 0.2 millimeters, with a thickness of about 0.1 to 0.15 generally employed. It is noted that thin walled substrates employ less material than traditionally sized substrates, thereby reducing the material costs associated with the substrate.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A gas treatment device, comprising:
a cylindrical substrate (74) disposed within a housing (70);
a support material (72) disposed between the housing and the substrate; and
a retention device (40) disposed between the housing and the substrate at one axial end of the substrate and comprising means (52) for relieving thermal stress on said retention device, wherein the retention device provides a barrier that prevents exposure of the support material to the axial flow of gas from upstream of the substrate, **characterized in that** the retention device comprises a plurality of individual spring elements (116), wherein the plurality of individual spring elements exert a compressive force against the housing and the substrate such that the substrate is retained within the housing.

2. The gas treatment device of Claim 1, wherein the retention device comprises an inner wall (120) in physical communication with an outer wall (112) via a bridge (122), a plurality of apertures (118) disposed in the inner wall and the bridge, wherein each spring element (116) of the plurality of spring elements is separated from each other by the plurality of apertures.

3. The gas treatment device of Claim 1, wherein the retention device further comprises a flange (124) in physical communication with the inner wall (120) and in physical communication with the substrate.

4. The gas treatment device of Claim 3, wherein the retention device further comprises a clearance portion (125) in physical communication with the flange (124) and the inner wall (120), wherein the clearance portion comprises a shape such that an edge of the substrate is not in physical communication with the clearance portion.

5. The gas treatment device of Claim 3, wherein the flange (124) extends from the inner wall (120) at angle θ of about 90° to about 120°.

6. The gas treatment device of Claim 1, wherein the retention device (300) comprises an inner wall (120) in physical communication with an outer wall (112) via a bridge (122), a plurality of apertures (118) disposed in the outer wall and the bridge, wherein each spring element (116) of the plurality of spring elements is separated from each other by the plurality of apertures.

7. The gas treatment device of Claim 1, wherein the retention device (400) comprises an inner wall (120) in physical communication with an outer wall (112) via a bridge (122), a plurality of apertures (118) disposed in the bridge, wherein each spring element (116) of the plurality of spring elements is separated from each other by the plurality of apertures.

8. The gas treatment device of Claim 1, further comprising a sheath (142) concentrically disposed around a surface (140) of the substrate (126).

9. The gas treatment device of Claim 1, wherein the housing further comprises a dimple (146) capable of retaining the retention device in an axial direction.

10. The gas treatment device of Claim 1, wherein the support material (72) is a strip of support material having a length of about 10 mm to about 50 mm.

11. The gas treatment device of Claim 1, wherein the retention device (40) comprises a cross-sectional geometry selected from the group consisting of semi-circular, semi-cylindrical, semi-oval, U-shaped, and semi-non-circular.

12. The gas treatment device of Claim 1, wherein the retention device (40) is capable of preventing plugging of the substrate with support material.

13. A method of manufacturing a gas treatment device, comprising:
disposing a cylindrical substrate (74) within a housing (70);
disposing a support material (72) between the housing and the substrate; and
disposing a retention devise (40) between the substrate and the housing, wherein the retention device provides a barrier that prevents exposure of the support material to the axial flow of gas from upstream of the substrate, and further wherein the retention device comprises a plurality of individual spring elements (116) and means (52) for relieving thermal stress on said retention device, wherein the plurality of individual spring elements exert a compressive force against the housing and the substrate such that the substrate is retained within the housing.

14. The method of Claim 13, wherein the retention device comprises an inner wall (120) in physical communication with an outer wall (112) via a bridge (122), a plurality of apertures (118) disposed in the inner wall and the bridge, wherein each spring element (116) of the plurality of spring elements is separated from each other by the plurality of apertures.

15. The method of Claim 13, wherein the retention device (300) comprises an inner wall (120) in physical communication with an outer wall (112) via a bridge (122), a plurality of apertures (118) disposed in the outer wall and the bridge, wherein each spring element (116) of the plurality of spring elements is separated from each other by the plurality of apertures.

16. The method of Claim 13, wherein the retention device (400) comprises an inner wall (120) in physical communication with an outer wall (112) via a bridge (122), a plurality of apertures (118) disposed in the bridge, wherein each spring element (116) of the plurality of spring elements is separated from each other by the plurality of apertures.

17. The method of Claim 13, further comprising a sheath (142) concentrically disposed around a surface (140) of the substrate (126).

18. A method of using a gas treatment device, the method comprises
passing a gas through the gas treatment device, wherein the gas treatment device comprises
a cylindrical substrate (74) disposed within a housing (70);
a support material (72) disposed between the housing and the substrate; and
a retention device (40) disposed between the housing and the substrate, wherein the retention device provides a barrier that prevents exposure of the support material to the axial flow of gas from upstream of the substrate, and further wherein the retention device comprises a plurality of individual spring elements (116) and means (52) for relieving thermal stress on said retention device, wherein the plurality of individual spring elements exert a compressive force against the housing and the substrate such that the substrate is retained within the housing; and
treating a species of the gas.

## Patentansprüche

1. Gasbehandlungseinrichtung, die umfasst:
ein zylindrisches Substrat (74), das in einem Gehäuse (70) angeordnet ist;
ein Stützmaterial (72), das zwischen dem Gehäuse und dem Substrat angeordnet ist; und
eine Halteeinrichtung (40), die zwischen dem Gehäuse und dem Substrat an einem axialen Ende des Substrats angeordnet ist und die ein Mittel (52) zum Abbauen von thermischer Beanspruchung der Halteeinrichtung umfasst, wobei die Halteeinrichtung eine Barriere bereitstellt, die verhindert, dass das Stützmaterial der axialen Gasströmung von stromaufwärts des Substrats ausgesetzt ist, **dadurch gekennzeichnet, dass** die Halteeinrichtung mehrere einzelne Federelemente (116) umfasst, wobei die mehreren einzelnen Federelemente eine Druckkraft gegen das Gehäuse und das Substrat derart ausüben, dass das Substrat in dem Gehäuse gehalten wird.

2. Gasbehandlungseinrichtung nach Anspruch 1, wobei die Halteeinrichtung eine innere Wand (120) über eine Brücke (122) in physikalischer Verbindung mit einer äußeren Wand (112) umfasst, wobei mehrere Öffnungen (118) in der inneren Wand und der Brücke angeordnet sind, wobei alle Federelemente (116) der mehreren Federelemente durch die mehreren Öffnungen voneinander getrennt sind.

3. Gasbehandlungseinrichtung nach Anspruch 1, wobei die Halteeinrichtung ferner einen Flansch (124) in physikalischer Verbindung mit der inneren Wand (120) und in physikalischer Verbindung mit dem Substrat umfasst.

4. Gasbehandlungseinrichtung nach Anspruch 3, wobei die Halteeinrichtung ferner einen Zwischenraumabschnitt (125) in physikalischer Verbindung mit dem Flansch (124) und der inneren Wand (120) umfasst, wobei der Zwischenraumabschnitt eine derartige Form umfasst, dass ein Rand des Substrats nicht in physikalischer Verbindung mit dem Zwischenraumabschnitt steht.

5. Gasbehandlungseinrichtung nach Anspruch 3, wobei sich der Flansch (124) in einem Winkel θ von etwa 90° bis etwa 120° von der inneren Wand (120) erstreckt.

6. Gasbehandlungseinrichtung nach Anspruch 1, wobei die Halteeinrichtung (300) eine innere Wand (120) über eine Brücke (122) in physikalischer Verbindung mit einer äußeren Wand (112) umfasst, wobei mehrere Öffnungen (118) in der äußeren Wand und der Brücke angeordnet sind, wobei alle Federelemente (116) der mehreren Federelemente durch die mehreren Öffnungen voneinander getrennt sind.

7. Gasbehandlungseinrichtung nach Anspruch 1, wobei die Halteeinrichtung (400) eine innere Wand (120) über eine Brücke (122) in physikalischer Verbindung mit einer äußeren Wand (112) umfasst, wobei mehrere Öffnungen (118) in der Brücke angeordnet sind, wobei alle Federelemente (116) der mehreren Federelemente durch die mehreren Öffnungen voneinander getrennt sind.

8. Gasbehandlungseinrichtung nach Anspruch 1, die ferner eine Umhüllung (142) umfasst, die konzentrisch um eine Oberfläche (140) des Substrats (126) herum angeordnet ist.

9. Gasbehandlungseinrichtung nach Anspruch 1, wobei das Gehäuse ferner eine Vertiefung (146) umfasst, die in der Lage ist, die Halteeinrichtung in einer axialen Richtung zu halten.

10. Gasbehandlungseinrichtung nach Anspruch 1, wobei das Stützmaterial (72) ein Streifen von Stützmaterial mit einer Länge von etwa 10 mm bis etwa 50 mm ist.

11. Gasbehandlungseinrichtung nach Anspruch 1, wobei die Halteeinrichtung (40) eine Querschnittsgeometrie umfasst, die aus der Gruppe ausgewählt ist, welche halbkreisförmig, halbzylindrisch, halboval, U-förmig und halbunrund umfasst.

12. Gasbehandlungseinrichtung nach Anspruch 1, wobei die Halteeinrichtung (40) in der Lage ist, ein Verstopfen des Substrats mit Stützmaterial zu verhindern.

13. Verfahren zum Herstellen einer Gasbehandlungseinrichtung, das umfasst:
Anordnen eines zylindrischen Substrats (74) in einem Gehäuse (70);
Anordnen eines Stützmaterials (72) zwischen dem Gehäuse und dem Substrat; und
Anordnen einer Halteeinrichtung (40) zwischen dem Substrat und dem Gehäuse, wobei die Halteeinrichtung eine Barriere bereitstellt, die verhindert, dass das Stützmaterial der axialen Gasströmung von stromaufwärts des Substrats ausgesetzt ist, und wobei ferner die Halteeinrichtung mehrere einzelne Federelemente (116) und ein Mittel (52) zum Abbauen von thermischer Beanspruchung der Halteeinrichtung umfasst, wobei die mehreren einzelnen Federelemente eine Druckkraft gegen das Gehäuse und das Substrat derart ausüben, dass das Substrat in dem Gehäuse gehalten wird.

14. Verfahren nach Anspruch 13, wobei die Halteeinrichtung eine innere Wand (120) über eine Brücke (122) in physikalischer Verbindung mit einer äußeren Wand (112) umfasst, wobei mehrere Öffnungen (118) in der inneren Wand und der Brücke angeordnet sind, wobei alle Federelemente (116) der mehreren Federelemente durch die mehreren Öffnungen voneinander getrennt sind.

15. Verfahren nach Anspruch 13, wobei die Halteeinrichtung (300) eine innere Wand (120) über eine Brücke (122) in physikalischer Verbindung mit einer äußeren Wand (112) umfasst, wobei mehrere Öffnungen (118) in der äußeren Wand und der Brücke angeordnet sind, wobei alle Federelemente (116) der mehreren Federelemente durch die mehreren Öffnungen voneinander getrennt sind.

16. Verfahren nach Anspruch 13, wobei die Halteeinrichtung (400) eine innere Wand (120) über eine Brücke (122) in physikalischer Verbindung mit einer äußeren Wand (112) umfasst, wobei mehrere Öffnungen (118) in der Brücke angeordnet sind, wobei alle Federelemente (116) der mehreren Federelemente durch die mehreren Öffnungen voneinander getrennt sind.

17. Verfahren nach Anspruch 13, das ferner eine Umhüllung (142) umfasst, die konzentrisch um eine Oberfläche (140) des Substrats (126) herum angeordnet ist.

18. Verfahren zum Verwenden einer Gasbehandlungseinrichtung, das umfasst:
Leiten eines Gases durch die Gasbehandlungseinrichtung, wobei die Gasbehandlungseinrichtung umfasst:
ein zylindrisches Substrat (74), das in einem Gehäuse (70) angeordnet ist;
ein Stützmaterial (72), das zwischen dem Gehäuse und dem Substrat angeordnet ist; und
eine Halteeinrichtung (40), die zwischen dem Gehäuse und dem Substrat angeordnet ist, wobei die Halteeinrichtung eine Barriere bereitstellt, die verhindert, dass das Stützmaterial der axialen Gasströmung von stromaufwärts des Substrats ausgesetzt ist, und wobei ferner die Halteeinrichtung mehrere einzelne Federelemente (116) und ein Mittel (52) zum Abbauen von thermischer Beanspruchung der Halteeinrichtung umfasst, wobei die mehreren einzelnen Federelemente eine Druckkraft gegen das Gehäuse und das Substrat derart ausüben, dass das Substrat in dem Gehäuse gehalten wird; und
Behandeln einer Spezies des Gases.

## Revendications

1. Un dispositif de traitement de gaz comprenant :
un substrat cylindrique (74) agencé dans un boîtier (70) ;
un matériau de support (72) agencé entre le boîtier et le substrat ; et
un dispositif de retenue (40) agencé entre le boîtier et le substrat à une extrémité axiale du substrat, et comprenant des moyens (52) pour relaxer la contrainte thermique s'exerçant sur ledit dispositif de retenue, le dispositif de retenue agissant comme une barrière empêchant l'exposition du matériau de support à l'écoulement axial de gaz provenant de l'amont du substrat, **caractérisé en ce que** le dispositif de retenue comprend une pluralité d'éléments de ressort individuels (116), la pluralité d'éléments de ressort individuels exerçant une force de compression contre le boîtier et le substrat de telle façon que le substrat est retenu dans le boîtier.

2. Le dispositif de traitement de gaz de la revendication 1, dans lequel le dispositif de retenue comprend une paroi interne (120) en communication physique avec une paroi externe (112) par l'intermédiaire d'un pont (122), une pluralité d'ouvertures (118) agencées dans la paroi interne et dans le pont, chaque élément de ressort (116) de la pluralité d'éléments de ressort étant séparé de chacun des autres par la pluralité d'ouvertures.

3. Le dispositif de traitement de gaz de la revendication 1, dans lequel le dispositif de retenue comprend en outre une collerette (124) en communication physique avec la paroi interne (120) et en communication physique avec le substrat.

4. Le dispositif de traitement de gaz de la revendication 3, dans lequel le dispositif de retenue comprend en outre une partie de dégagement (125) en communication physique avec la collerette (124) et la paroi interne (120), la partie de dégagement étant formée de telle façon qu'un bord du substrat n'est pas en communication physique avec la partie de dégagement.

5. Le dispositif de traitement de gaz de la revendication 3, dans lequel la collerette (124) s'étend depuis la paroi interne (120) selon un angle θ compris entre environ 90° et

6. Le dispositif de traitement de gaz de la revendication 1, dans lequel le dispositif de retenue (300) comprend une paroi interne (120) en communication physique avec une paroi externe (112) par l'intermédiaire d'un pont (122), une pluralité d'ouvertures (118) agencées dans la paroi externe et dans le pont, chaque élément de ressort (116) de la pluralité d'éléments de ressort étant séparé de chacun des autres par la pluralité d'ouvertures.

7. Le dispositif de traitement de gaz de la revendication 1, dans lequel le dispositif de retenue (400) comprend une paroi interne (120) en communication physique avec une paroi externe (112) par l'intermédiaire d'un pont (122), une pluralité d'ouvertures (118) agencées dans le pont, chaque élément de ressort (116) de la pluralité d'éléments de ressort étant séparé de chacun des autres par la pluralité d'ouvertures.

8. Le dispositif de traitement de gaz de la revendication 1, comprenant en outre une gaine (142) agencée concentriquement autour d'une surface (140) du substrat (126).

9. Le dispositif de traitement de gaz de la revendication 1, dans lequel le boîtier comprend en outre un relief (146) pouvant retenir le dispositif de retenue dans une direction axiale.

10. Le dispositif de traitement de gaz de la revendication 1, dans lequel le matériau de support (72) est une bande de matériau de support ayant une longueur comprise entre environ 10 mm et environ 50 mm.

11. Le dispositif de traitement de gaz de la revendication 1, dans lequel le dispositif de retenue (40) présente, en section traversale, une géométrie choisie parmi le groupe constitué des géométries semi-circulaire, semi-cylindrique, semi-ovale, en forme de U, et semi-non-circulaire.

12. Le dispositif de traitement de gaz de la revendication 1, dans lequel le dispositif de retenue (40) peut empêcher le colmatage du substrat avec le matériau de support.

13. Un procédé de fabrication d'un dispositif de traitement de gaz, comprenant les étapes consistant à :
agencer un substrat cylindrique (74) dans un boîtier (70) ;
agencer un matériau de support (72) entre le boîtier et le substrat ; et
agencer un dispositif de retenue (40) entre le substrat et le boîtier, le dispositif de retenue agissant comme une barrière empêchant l'exposition du matériau de support à l'écoulement axial de gaz depuis l'amont du substrat, le dispositif de retenue comprenant en outre une pluralité d'éléments de ressort individuels (116) et des moyens (52) pour relaxer la contrainte thermique s'exerçant sur ledit dispositif de retenue, et la pluralité d'éléments de ressort individuels exerçant une force de compression contre le boîtier et le substrat de telle façon que le substrat est retenu dans le boîtier.

14. Le procédé de la revendication 13, dans lequel le dispositif de retenue comprend une paroi interne (120) en communication physique avec une paroi externe (112) par l'intermédiaire d'un pont (122), une pluralité d'ouvertures (118) agencées dans la paroi interne et le pont, chaque élément de ressort (116) de la pluralité d'éléments de ressort étant séparé de chacun des autres par la pluralité d'ouvertures.

15. Le procédé de la revendication 13, dans lequel le dispositif de retenue (300) comprend une paroi interne (120) en communication physique avec une paroi externe (112) par l'intermédiaire d'un pont (122), une pluralité d'ouvertures (118) agencées dans la paroi externe et le pont, chaque élément de ressort (116) de la pluralité d'éléments de ressort étant séparé de chacun des autres par la pluralité d'ouvertures.

16. Le procédé de la revendication 13, dans lequel le dispositif de retenue (400) comprend une paroi interne (120) en communication physique avec une paroi externe (112) par l'intermédiaire d'un pont (122), une pluralité d'ouvertures (118) agencées dans le pont, chaque élément de ressort (116) de la pluralité d'éléments de ressort étant séparé de chacun des autres par la pluralité d'ouvertures.

17. Le procédé de la revendication 13, comprenant en outre une gaine (142) agencée concentriquement autour d'une surface (140) du substrat (126).

18. Un procédé d'utilisation d'un dispositif de traitement de gaz, le procédé comprenant les étapes consistant à :
acheminer un gaz à travers le dispositif de traitement de gaz, le dispositif de traitement de gaz comprenant
un substrat cylindrique (74) agencé dans un boîtier (70) ;
un matériau de support (72) agencé entre le boîtier et le substrat ; et
un dispositif de retenue (40) agencé entre le boîtier et le substrat, le dispositif de retenue agissant comme une barrière empêchant l'exposition du matériau de support à l'écoulement axial de gaz depuis l'amont du substrat, le dispositif de retenue comprenant en outre une pluralité d'éléments de ressort individuels (116) et des moyens (52) pour relaxer la contrainte thermique s'exerçant sur ledit dispositif de retenue, la pluralité d'éléments de ressort individuels exerçant une force de compression contre le boîtier et le substrat de telle façon que le substrat est retenu dans le boîtier ; et
traiter un composant du gaz.
